# EUROPÄISCHE PATENTSCHRIFT

(11) **EP 1 445 174 B1**
(45) Veröffentlichungstag und Bekanntmachung des Hinweises auf die Patenterteilung: **16.01.2008**
(21) Anmeldenummer: 04002718.7
(22) Anmeldetag: 06.02.2004
(51) Int. Cl.: B62D 21/00, B62D 29/00

(54) **Fahrzeug mit tragenden strukturellen Teilen**
Vehicle with load bearing structural elements
Véhicule avec éléments structuraux porteurs

(30) Priorität: 07.02.2003 DE 20301974 U
(43) Veröffentlichungstag der Anmeldung: 11.08.2004
(73) Patentinhaber: Westfalia Loading Systems GmbH & Co. KG, 33161 Hövelhof (DE)
(72) Erfinder: Kramer, Rainer, 33332 Gütersloh (DE); Wiedenmann, Reinhold, 59555 Lippstadt (DE)
(74) Vertreter: Philipp, Matthias

(56) Entgegenhaltungen:
- EP-A- 0 479 115
- WO-A-92/21548
- GB-A- 2 184 404
- US-A- 5 709 309

## Beschreibung

Die Erfindung betrifft ein Fahrzeug mit einem Fahrgestell, das mindestens ein tragendes strukturelles Teil aufweist, wobei das strukturelle Teil stärker beanspruchte Materialbereiche und weniger stark beanspruchte Materialbereiche aufweist.

Insbesondere bei Nutzfahrzeugen, die für den Transport einer maximalen Nutzlast ausgelegt werden, ist es von wesentlicher Bedeutung, daß die Fahrzeugmasse bzw. das Gewicht des Fahrzeugs möglichst gering gehalten wird. In Anbetracht von Komponenten wie Motor, Getriebe, Achsen, Räder usw., die weitgehend standardisiert sind, bietet sich insbesondere das Fahrgestell zur Erzielung von Gewichtsreduktionen an. Allerdings werden auch im Bereich des Fahrgestells vielfach standardisierte und genormte Komponenten verwendet, so daß eine Gewichtseinsparung durch Verwendung insgesamt leichterer tragender Teile sehr aufwendig ist, da zahlreiche Änderungen und neue Festigkeitsberechnungen erforderlich sind.

Dokument WO 9 221 548 zeigt ein Fahrgestell nach dem Oberbegriff von Anspruch 1.

Die Aufgabe der Erfindung besteht darin, ein gattungsgemäßes Fahrzeug zur Verfügung zu stellen, bei dem mit relativ geringem Aufwand erhebliche Gewichtseinsparungen am Fahrgestell möglich sind.

Diese Aufgabe wird erfindungsgemäß bei einem gattungsgemäßen Fahrzeug durch die Maßnahme gelöst, daß in einem oder mehreren der weniger stark beanspruchten Materialbereiche zur Gewichtseinsparung mindestens ein Ausschnitt vorgesehen ist, der mit Plattenmaterial geringeren Gewichts geschlossen ist. Die Bezeichnung "geringeres Gewicht" bezieht sich hierbei auf das Gewicht des Ausschnitts innerhalb des weniger stark beanspruchten Materialbereichs im Vergleich zu dem zum Schließen des Ausschnitts eingesetzten Plattenmaterial.

Die Bezeichnung "stärker beanspruchter Materialbereich" weist darauf hin, daß in diesen Bereichen im Betrieb des Fahrzeugs größere Spannungen auftreten als in einem "weniger stark beanspruchten Materialbereich", in dem im Betrieb des Fahrzeugs vergleichsweise weniger große Spannungen auftreten, so daß in einem weniger stark beanspruchten Materialbereich ohne nennenswerten Festigkeits- bzw. Stabilitätsverlust des tragenden Teils Ausschnitte vorgesehen werden können, die überproportional stark zur Gewichtseinsparung beitragen.

Es kann vorgesehen sein, daß mindestens ein strukturelles Teil ein offener oder geschlossener Hohlprofilträger ist, insbesondere ein Rohr mit rundem oder mehreckigem Querschnitt. Alternativ kann mindestens ein strukturelles Teil ein offener Profilträger sein, insbesondere ein T-, I- oder U-Profil.

Bevorzugt ist vorgesehen, daß mindestens ein strukturelles Teil ein Längs- oder Querträger des Fahrzeugs ist.

Mindestens ein strukturelles Teil kann einstückig hergestellt, z.B. gezogen, oder aus mehreren Komponenten zusammengesetzt sein. Hierbei kann vorgesehen sein, daß das strukturelle Teil aus mehreren Komponenten geschweißt ist. Insbesondere kann mindestens ein strukturelles Teil aus mindestens zwei stärker beanspruchten Profilträgern mit einem diese verbindenden, bereichsweise weniger stark beanspruchten Verstärkungsblech bestehen, wobei mindestens ein Ausschnitt in dem Verstärkungsblech vorgesehen ist.

Die Erfindung sieht bevorzugt vor, daß der mindestens eine Ausschnitt in einem Materialbereich vorgesehen ist, der eine geringere Dicke als die stärker beanspruchten Materialbereiche aufweist. Insbesondere besteht die Möglichkeit, daß der Ausschnitt in einem flächigen oder ebenen Materialbereich des strukturellen Teils vorgesehen ist, bspw. in einem blech- oder plattenförmigen Materialbereich mit konstanter Dicke.

Die Erfindung sieht bevorzugt vor, daß das Plattenmaterial eben ist. Allerdings kann auch vorgesehen sein, daß das Plattenmaterial an eine Krümmung des strukturellen Teils angepaßt ist.

Bevorzugt ist vorgesehen, daß das Plattenmaterial an Randbereichen des mindestens einen Ausschnitts mit dem strukturellen Teil verklebt, verschraubt und/oder vernietet ist.

Es kann vorgesehen sein, daß mehrere Ausschnitte eines strukturellen Teils von einem einteiligen Stück Plattenmaterial geschlossen sind.

Die Erfindung sieht bevorzugt vor, daß das Plattenmaterial im fertigen Fahrzeug im wesentlichen frei von strukturellen Belastungen ist, d.h. keine tragende Funktion übernimmt, sondern im wesentlichen lediglich z.B. Windbelastungen, berührender Ladung o.ä. standhalten muß.

Bevorzugt hat das Plattenmaterial eine Dicke von 1 bis 20 mm, weiter bevorzugt von 5 bis 15 mm.

Mindestens ein Ausschnitt kann kreisförmig oder rechteckig oder trapezförmig mit abgerundeten Ecken sein. Allerdings können die Ausschnitte selbstverständlich grundsätzlich jede beliebige Form haben.

Die Erfindung sieht bevorzugt vor, daß der mindestens eine Ausschnitt durch das Plattenmaterial staubdicht, insbesondere wasserdicht geschlossen ist.

Weitere Vorteile und Merkmale der Erfindung ergeben sich aus der nachfolgenden Beschreibung eines Ausführungsbeispiels, wobei auf eine Zeichnung Bezug genommen ist, in der
Fig. 1 eine perspektivische, ausschnittsweise Ansicht tragender Strukturelemente eines Fahrgestells für einen Nutzfahrzeug-Anhänger in einem Rohbauzustand zeigt;
Fig. 2 eine ähnliche Ansicht wie Fig. 1 zeigt, wobei Ausschnitte in der Struktur mit Plattenmaterial geschlossen sind,
Fig. 3 eine ähnliche Ansicht wie Fig. 2 zeigt, wobei zusätzlich ein vorderer Teil des Fahrgestells mit weiteren Ausschnitten dargestellt ist, und
Fig. 4 den in Fig. 3 dargestellten vorderen Teil des Fahrgestells aus einer gegenüber Fig. 3 entgegengesetzten Blickrichtung zeigt.

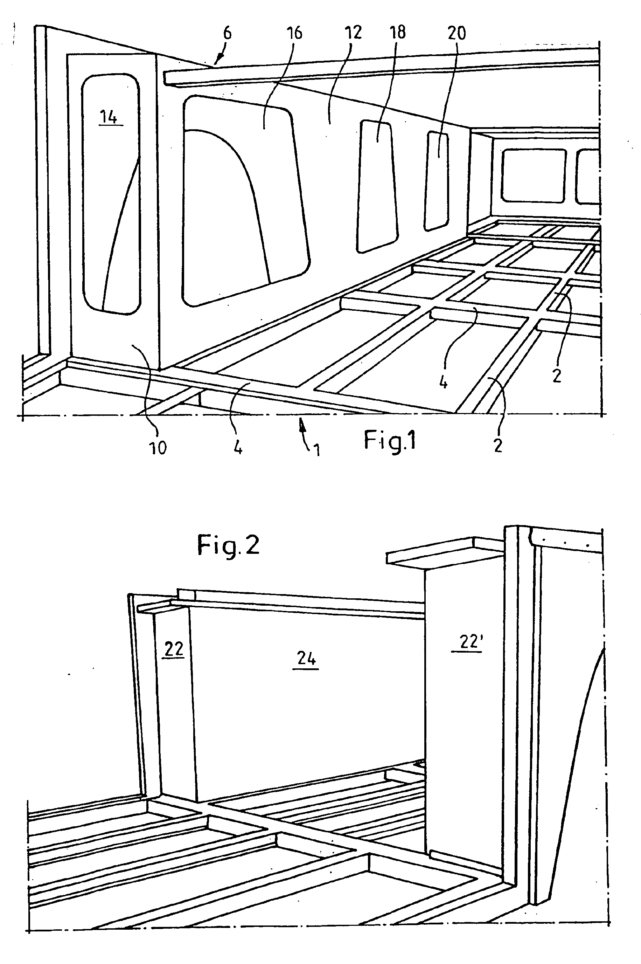

In Fig. 1 ist in einer perspektivischen Ansicht ein Teil einer tragenden Struktur bzw. des Fahrgestells eines Auflieger-Anhängers dargestellt, und zwar Längsträger 2 und Querträger 4, die eine Bodengruppe bilden, sowie ein seitliches, insgesamt kastenförmiges strukturelles Teil 6, welches einen seitlichen Radschacht für die Hinterräder (drei Achsen) des Anhängers bildet.

Wie Fig. 1 weiter zeigt, ist der Radschacht bzw. das strukturelle Teil 6 zumindest teilweise aus rechteckigen Blechteilen gebildet, von denen ein vorderes 10 und ein innenliegendes 12 sichtbar ist. In dem vorderen Blechteil 10 ist ein rechteckförmiger, abgerundete Ecken aufweisender Ausschnitt 14 eingebracht, während in das innenliegende Blechteil 12 insgesamt drei trapezförmige Ausschnitte 16, 18, 20, ebenfalls mit abgerundeten Ecken, eingebracht sind. Die den Ausschnitten entsprechenden Flächenbereiche bzw. Materialbereiche der Blechteile 10, 12 sind vorab als weniger stark beanspruchte Materialbereiche ermittelt worden, im Vergleich zu den längs, quer und vertikal verlaufenden Rand- und Eckbereichen der Blechteile 10, 12, die stärker beanspruchte Materialbereiche darstellen und mit in Fig. 1 nicht sichtbaren Profilträgern verstärkt sein können.

Wie Fig. 2 zeigt, sind die Ausschnitte 14 bis 20 der Blechteile 10, 12 mit rechteckförmig zugeschnittenen Stücken aus Plattenmaterial 22, 22' und 24 abgedeckt bzw. geschlossen, wobei das Plattenmaterial auf die Blechteile 10, 12 geklebt, geschraubt und/oder genietet ist. Das Plattenmaterial schließt die Ausschnitte wasser- und staubdicht ab. Wenn zweckmäßig, kann das Plattenmaterial außerdem so beschaffen sein, daß eine zusätzliche Wärmedämmung und/oder Schallisolierung des späteren Innenraums des Fahrzeugs erreicht wird. Auch ist denkbar, die Ausschnitte beidseitig zu verschließen. Die der Wandstärke des Ausschnitts entsprechenden Zwischenräume könnte zusätzlich ausgeschäumt werden.

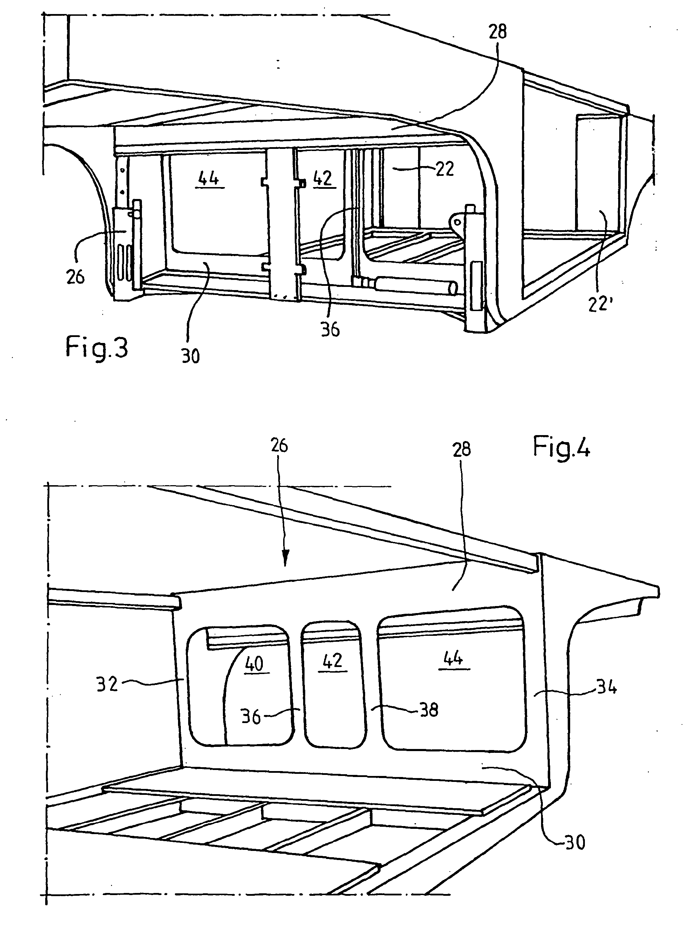

Fig. 3 und 4 zeigen einen ähnlichen Sachverhalt wie Fig. 1 und 2, allerdings nicht im Bereich der Radschächte, sondern im Bereich einer vorderen vertikalen Wand 26 des Anhängers. Da die relativ stark beanspruchten Bereiche der vertikalen Wand 26 in deren horizontalen 28, 30 und vertikalen Randbereichen 32, 34 liegen, sowie in mittleren Bereichen 36, 38, können zwischen den genannten Bereichen liegende Ausschnitte 40, 42, 44 im Material der vertikalen Wand 26 vorgenommen werden, ohne daß deren Verstärkungsfunktion (Verwindungssteifigkeit in Querrichtung) nennenswert beeinträchtigt wird. Die Ausschnitte 40 bis 44 werden in ähnlicher Weise wie die Ausschnitte 14 bis 20 (Fig. 1) mit einem oder mehreren Stücken Plattenmaterial (nicht dargestellt) verschlossen.

Die Bezeichnung "Ausschnitt" im Sinne der vorliegenden Erfindung bedeutet nicht zwangsläufig, daß in ein fertiges Teil durch nachträgliches Ausschneiden eine entsprechende Öffnung eingebracht wird, sondern umfaßt auch, daß ein Ausschnitt im Sinne einer Aussparung im Zuge der Fertigung eines strukturellen Teils freigelassen wird, indem bspw. in der vertikalen Wand 26 von vornherein nur die in Fig. 4 sichtbaren, stärker beanspruchten Bereiche aus streifenförmigen Blechteilen zu der dargestellten Struktur zusammengeschweißt werden und die dadurch gebildeten Ausschnitte bzw. Öffnungen mit leichterem Plattenmaterial geschlossen werden. Neben den dargestellten Ausschnitten können auch in Profilträgern wie den Längs- oder Querträgern 2, 4 Ausschnitte eingebracht sein, soweit sinnvoll.

### Bezugszeichenliste

- 1: Fahrgestell
- 2: Längsträger
- 4: Querträger
- 6: strukturelles Teil (Radschacht)
- 10: vorderes Blechteil
- 12: innenliegendes Blechteil
- 14, 16,18,20: Ausschnitt
- 22, 22': Plattenmaterial
- 24: Plattenmaterial
- 26: strukturelles Teil (vertikale Wand)
- 28, 30: horizontaler Randbereich (von 26)
- 32, 34: vertikaler Randbereich (von 26)
- 36, 38: mittlerer Bereich (von 26)
- 40, 42, 44: Ausschnitt

## Patentansprüche

1. Fahrzeug mit einem Fahrgestell (1), das mindestens ein tragendes strukturelles Teil (6, 26) aufweist, wobei das strukturelle Teil (6, 26) aus einem Längs- oder Querträger besteht und stärker beanspruchte Materialbereiche und weniger stark beanspruchte Materialbereiche aufweist, **dadurch gekennzeichnet, daß** in einem oder mehreren der weniger stark beanspruchten Materialbereiche zur Gewichtseinsparung mindestens ein Ausschnitt (14, 16, 18, 20; 40, 42, 44) vorgesehen ist, der mit Plattenmaterial (22, 22', 24) geringeren Gewichts geschlossen ist.

2. Fahrzeug nach Anspruch 1, **dadurch gekennzeichnet, daß** mindestens ein strukturelles Teil ein Rohr mit rundem oder mehreckigem Querschnitt ist.

3. Fahrzeug nach Anspruch 1, **dadurch gekennzeichnet, daß** mindestens ein strukturelles Teil ein T-, I- oder U-Profil ist.

4. Fahrzeug nach einem der vorangehenden Ansprüche, **dadurch gekennzeichnet, daß** mindestens ein strukturelles Teil einstückig gezogen oder aus mehreren Komponenten zusammengesetzt ist.

5. Fahrzeug nach Anspruch 4, **dadurch gekennzeichnet, daß** mindestens ein strukturelles Teil aus mehreren Komponenten geschweißt ist.

6. Fahrzeug nach einem der vorangehenden Ansprüche, **dadurch gekennzeichnet, daß** der mindestens eine Ausschnitt in einem Materialbereich vorgesehen ist, der eine geringere Dicke als die stärker beanspruchten Materialbereiche aufweist.

7. Fahrzeug nach einem der vorangehenden Ansprüche, **dadurch gekennzeichnet, daß** der Ausschnitt in einem flächigen Materialbereich des strukturellen Teils vorgesehen ist.

8. Fahrzeug nach einem der vorangehenden Ansprüche, **dadurch gekennzeichnet, daß** das Plattenmaterial (22, 22', 24) eben ist.

9. Fahrzeug nach einem der Ansprüche 1 bis 7, **dadurch gekennzeichnet, daß** das Plattenmaterial an eine Krümmung des strukturellen Teils angepaßt ist.

10. Fahrzeug nach einem der vorangehenden Ansprüche, **dadurch gekennzeichnet, daß** das Plattenmaterial an Randbereichen des mindestens einen Ausschnitts mit dem strukturellen Teil verklebt, verschraubt und/oder vernietet ist.

11. Fahrzeug nach einem der vorangehenden der Ansprüche, **dadurch gekennzeichnet, daß** mehrere Ausschnitte (16, 18, 20; 40, 42, 44) eines strukturellen Teils (6, 26) von einem einteiligen Stück Plattenmaterial (24) geschlossen sind.

12. Fahrzeug nach einem der vorangehenden Ansprüche, **dadurch gekennzeichnet, daß** das Plattenmaterial im fertigen Fahrzeug im wesentlichen frei von strukturellen Belastungen ist.

13. Fahrzeug nach einem der vorangehenden Ansprüche, **dadurch gekennzeichnet, daß** das Plattenmaterial eine Dicke von 1 bis 20 mm, bevorzugt von 5 bis 15 mm aufweist.

14. Fahrzeug nach einem der vorangehenden Ansprüche, **dadurch gekennzeichnet, daß** mindestens ein Ausschnitt kreisförmig oder rechteckig oder trapezförmig mit abgerundeten Ekken ist.

15. Fahrzeug nach einem der vorangehenden Ansprüche, **dadurch gekennzeichnet, daß** der mindestens eine Ausschnitt durch das Plattenmaterial staubdicht, insbesondere wasserdicht geschlossen ist.

## Claims

1. Vehicle with a chassis (1) which has at least one load-bearing structural part (6, 26), with the structural part (6, 26) being composed of a longitudinal or transverse member and having more heavily-loaded material regions and less heavily-loaded material regions, **characterized in that**, in one or more of the less heavily-loaded material regions, in order to save weight, at least one cutout (14, 16, 18, 20; 40, 42, 44) is provided which is closed off by relatively lightweight plate material (22, 22', 24).

2. Vehicle according to Claim 1, **characterized in that** at least one structural part is a tube with a round or polygonal cross section.

3. Vehicle according to Claim 1, **characterized in that** at least one structural part is a T-shaped, I-shaped or U-shaped profile.

4. Vehicle according to one of the preceding claims, **characterized in that** at least one structural part is drawn in one piece or is composed of a plurality of components.

5. Vehicle according to Claim 4, **characterized in that** at least one structural part is welded from a plurality of components.

6. Vehicle according to one of the preceding claims, **characterized in that** the at least one cutout is provided in a material region which has a smaller thickness than the more heavily-loaded material regions.

7. Vehicle according to one of the preceding claims, **characterized in that** the cutout is provided in a plane material region of the structural part.

8. Vehicle according to one of the preceding claims, **characterized in that** the plate material (22, 22', 24) is planar.

9. Vehicle according to one of Claims 1 to 7, **characterized in that** the plate material is matched to a curvature of the structural part.

10. Vehicle according to one of the preceding claims, **characterized in that** the plate material is adhesively bonded, screwed and/or riveted to the structural part at edge regions of the at least one cutout.

11. Vehicle according to one of the preceding claims, **characterized in that** a plurality of cutouts (16, 18, 20; 40, 42, 44) of a structural part (6, 26) are closed off by a single-part piece of plate material (24).

12. Vehicle according to one of the preceding claims, **characterized in that** the plate material is substantially free from structural loads in the finished vehicle.

13. Vehicle according to one of the preceding claims, **characterized in that** the plate material has a thickness of 1 to 20 mm, preferably from 5 to 15 mm.

14. Vehicle according to one of the preceding claims, **characterized in that** at least one cutout is circular or rectangular or trapezoidal with rounded corners.

15. Vehicle according to one of the preceding claims, **characterized in that** the at least one cutout is closed off by the plate material in a dust-tight, in particular water-tight, fashion.

## Revendications

1. Véhicule avec un châssis (1), présentant au moins un élément structurel (6, 26) porteur, l'élément structurel (6, 26) étant composé d'un longeron ou d'une traverse et présentant des zones de matériau plus fortement sollicitées et des zones de matériau moins fortement sollicitées, **caractérisé en ce que**, dans une ou plusieurs zones de matériau moins fortement sollicitées, dans le but d'économiser du poids, au moins une découpure (14, 16, 18, 20 ; 40, 42, 44) est prévue, fermée avec un matériau en plaque (22, 22', 24) de faible poids.

2. Véhicule selon la revendication 1, **caractérisé en ce qu'**au moins un élément structurel est un tube à section transversale ronde ou polygonale.

3. Véhicule selon la revendication 1, **caractérisé en ce qu'**au moins un élément structurel est un profilé en T, en I ou en U.

4. Véhicule selon l'une des revendications précédentes, **caractérisé en ce qu'**au moins un élément structurel est étiré d'une seule pièce, ou composé d'une pluralité de composants.

5. Véhicule selon la revendication 5, **caractérisé en ce qu'**au moins un élément structurel est obtenu par soudage de plusieurs composants.

6. Véhicule selon l'une des revendications précédentes, **caractérisé en ce que** la au moins une découpure est prévue dans une zone de matériau présentant une plus faible épaisseur que les zones de matériau plus fortement sollicitées.

7. Véhicule selon l'une des revendications précédentes, **caractérisé en ce que** la découpure est prévue dans une zone de matériau plate de l'élément structurel.

8. Véhicule selon l'une des revendications précédentes, **caractérisé en ce que** le matériau en plaque (22, 22', 24) est plan.

9. Véhicule selon l'une des revendications 1 à 7, **caractérisé en ce que** le matériau en plaque est adapté à une courbure de l'élément structurel.

10. Véhicule selon l'une des revendications précédentes, **caractérisé en ce que** le matériau en plaque est collé, vissé et/ou riveté à l'élément structurel, sur des zones de bordure de la au moins une découpure.

11. Véhicule selon l'une des revendications précédentes, **caractérisé en ce que** plusieurs découpures (16, 18, 20 ; 40, 42, 44) d'un élément structurel (6, 26) sont fermées par un morceau monobloc de matériau en plaque (24).

12. Véhicule selon l'une des revendications précédentes, **caractérisé en ce que** le matériau en plaque, dans le véhicule achevé, est pratiquement exempt de sollicitation structurelle.

13. Véhicule selon l'une des revendications précédentes, **caractérisé en ce que** le matériau en plaque présente une épaisseur de 1 à 20 mm, de préférence, de 5 à 15 mm.

14. Véhicule selon l'une des revendications précédentes, **caractérisé en ce qu'**au moins une découpure est en forme de cercle, ou en forme de rectangle, ou en forme de trapèze, avec des angles arrondis.

15. Véhicule selon l'une des revendications précédentes, **caractérisé en ce que** la au moins une découpure est fermée de façon étanché à la poussière, en particulier étanche à l'eau, par le matériau en plaque.
